(19) Europäisches Patentamt / European Patent Office / Office européen des brevets

(11) **EP 1 548 485 B1**

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(51) Int Cl.:
*G02B 21/36* (2006.01)  *G02B 21/26* (2006.01)
*G02B 27/00* (2006.01)  *G06T 7/20* (2006.01)

(21) Anmeldenummer: **04105925.4**

(22) Anmeldetag: **19.11.2004**

(54) **Verfahren zur Korrektur der Drift bei einem optischen Gerät**

Method for drift correction of an optical device

Méthode de correction de la dérive d'un appareil optique

(84) Benannte Vertragsstaaten:
**DE FR GB**

(30) Priorität: **27.12.2003 DE 10361327**

(43) Veröffentlichungstag der Anmeldung:
**29.06.2005 Patentblatt 2005/26**

(73) Patentinhaber: **Leica Microsystems CMS GmbH
35578 Wetzlar (DE)**

(72) Erfinder: **Olschewski, Frank
69118, Heidelberg (DE)**

(74) Vertreter: **Hassenbürger, Anneliese et al
Leica Microsystems GmbH
Corporate Patents + Trademarks Department
Ernst-Leitz-Strasse 17-37
35578 Wetzlar (DE)**

(56) Entgegenhaltungen:
**EP-A- 0 332 169      EP-A- 0 425 288
DE-A1- 10 246 274   DE-C1- 19 530 136
US-A- 5 793 053       US-A1- 2002 105 723**

- **PATENT ABSTRACTS OF JAPAN Bd. 1996, Nr. 02, 29. Februar 1996 (1996-02-29) -& JP 07 253548 A (NIKON CORP), 3. Oktober 1995 (1995-10-03)**
- **HUERTH S H ET AL: "Quantitative method of image analysis when drift is present in a scanning probe microscope" JOURNAL OF VACUUM SCIENCE & TECHNOLOGY B: MICROELECTRONICS PROCESSING AND PHENOMENA, AMERICAN VACUUM SOCIETY, NEW YORK, NY, US, Bd. 21, Nr. 2, März 2003 (2003-03), Seiten 714-718, XP012009831 ISSN: 0734-211X**

EP 1 548 485 B1

**Beschreibung**

Die Erfindung betrifft ein Verfahren zur Berechnung der Drift bei einem Mikroskop gemäß dem Oberbegriff des Anspruchs 1 sowie ein Mikroskop mit einer Einrichtung zur Berechnung der Drift gemäß dem Oberbegriff des Anspruchs 7.

Optische Geräte, insbesondere Mikroskope können auch als mechanische Gebilde betrachtet werden, die aufgrund von technisch bedingten Grenzen, etwa der Genauigkeit bei der Gehäuseherstellung oder möglichen Passerungenauigkeiten beim Zusammenfügen der Einzelteile makroskopisch zwar recht stabil wirken, aber mikroskopisch doch Bewegungen aufzeigen. Oft sind diese Bewegungen thermisch bedingt. In der Regel werden diese Bewegungen als Drift bezeichnet. Allgemein muss allerdings angemerkt werden, dass Drift in der Regel nur eine beobachtete Ausprägung ist, die bei Langzeitbeobachtungen unbeweglicher Teile eines Objekts mit einer Kamera oder einem Konfokalscanner als virtuelle Bewegung dieses Objekts über die Zeit wahrgenommen wird. Diese Scheinbewegung des Objekts kann bei optischen Geraten vom Benutzer wahrgenommen werden und führt häufig zu Reklamationen oder Schwierigkeiten bei der Auswertung der Aufnahmen von untersuchten Objekten.

Drift entsteht als sichtbares Ergebnis des Zusammenwirkens aller Teile eines optischen Geräts. So Karin sich z.B. ein Blech durch Erwärmung ausdehnen und ein anderes sich zusammenziehen und eine andere Komponente durch die so entstehenden Kräfte bewegen oder sogar verformen. Das Ergebnis wird jedoch nur als relativ kleine Veränderung in x-, y- und z-Richtung wahrgenommen.

Um Drift zu vermeiden, kann eine geschickte mechanische Konstruktion eingesetzt werden, wobei die Drift oftmals zumindest auf ein vernachlässigbares Maß reduziert werden kann.

Mit zunehmender Auflösung und Vergrößerung wird es allerdings immer schwieriger, eine derartige Reduzierung der Drift zu erreichen. Denn hierzu müssen immer kleinere Bewegungen des optischen Geräts relativ zum Objekt erkannt bzw. vermieden werden, was häufig auch kostenintensive Maßnahmen erfordert. Zudem besteht bei heutigen optischen Geräten die Tendenz, immer preisgünstigere Materialien zu benutzen, wobei oftmals Metallteile durch Plastikteile ersetzt werden. Damit treten jedoch oft neue und auch schlecht abschätzbare Effekte auf, die die Drift negativ beeinflussen.

Aus der deutschen Offenlegungsschrift DE 199 59 228 ist ein Laser-Scanning-Mikroskop bekannt, das einen Temperatursensor umfasst, dessen Signale zur Fokuskorrektur an Hand gespeicherter Bezugswerte erfolgen. Die gemessene Temperaturänderung wird in eine entsprechend auszuführende Änderung mindestens eines Bauteils (Tisch verfahren, Piezo stellen, Spiegel verformen, etc.) des Mikroskops umgerechnet. Die Temperaturkompensation kann ebenfalls über eine gespeicherte Tabelle oder Kurve erfolgen. Mit diesem Verfahren kann lediglich die z-Koordinate, also der Fokus, konstant gehalten werden. Ein Auswandern der Probe innerhalb der durch die Tischoberfläche definierten x-y-Ebene kann hiermit nicht kompensiert werden.

Die deutsche Patentschrift DE 195 301 36 C1 beschreibt ebenfalls ein Mikroskop mit einer Fokusstabilisierung. Die Temperaturstabilisierung erfolgt durch zwei Metallstäbe mit unterschiedlichen thermischen Ausdehnungskoeffizienten. Ein Stab ist mit der Zahnstange für den Fokustrieb verbunden, der andere Stab mit dem Mikroskoptisch. Die Stabilisierung des Fokus erfolgt ausschließlich durch individuell auf das Mikroskop abgestimmte mechanische Mittel.

Im japanischen Abstrakt JP 07 253548 ist ein Mikroskop beschrieben, das zur Beobachtung von lebenden Zellen geeignet ist. Zu verschiedenen Zeiten werden Bilder aufgenommen und abgespeichert. Die einzelnen Bilder werden benutzt, um die Bewegung der Probe zu ermitteln. Der Tisch wird dann entsprechend gesteuert, damit das Objekt in der optischen Achse des Mikroskops bleibt.

Die veröffentlichte US-Patentanmeldung 2002/0105723 offenbart eine Referenzprobe, mit der auch die Drift eines Mikroskops kompensiert werden kann. Dazu sind Deckgläser mit Strukturen versehen an Hand dessen das Mikroskop eingestellt werden kann, die Drift ermittelt werden kann und fokussiert werden kann.

Das europäische Patent 0 332 169 offenbart eine Vorrichtung zum Erkennen der Verwacklung eines Bildes. Die Detektion der Verwacklung wird zur automatischen Bildstabilisierung einer Video-Kamera verwendet. Eine Korrektur der Drift aufgrund von sich ändernden Kameraeigenschaften (mechanische Deformierung, thermische Veränderungen, etc.) wird nicht berücksichtigt.

Das europäische Patent 0 425 288 offenbart ein Verfahren und eine Vorrichtung zum Ermitteln von Bewegungsvektoren. Dabei wird die Bewegung zwischen zwei nacheinander aufgenommenen Bildern ermittelt. Dabei wird das Bild in Blöcke aufgeteilt und an Hand derer werden Bewegungsvektoren errechnet. Die Bewegungsvektoren werden einer Filterung unterzogen, um keine Bildinformation zu verlieren. Eine Driftkorrektur ist hier nicht erwähnt.

Die vorgeschlagenen Driftkorrekturen setzten auch voraus, dass die Drift seine Ursache in einer Änderung der erfassten Temperatur hat. Temperaturänderungen, die sehr klein sind, jedoch zu einer großen Drift führen, können so jedoch nicht ausreichend erfasst und korrigiert werden. Drift, die auf andere Ursachen zurückzuführen ist, wie etwa auf eine Änderung der Aufstellungsbedingungen oder das oben bereits beschriebene Zusammenwirken der Teile des Mikroskops, kann damit nicht erfasst werden.

Aufgabe der vorliegenden Erfindung ist es, ein Verfahren zur Korrektur der Drift bei einem Mikroskop vorzuschlagen, das von der Ursache der Drift unabhängig ist.

Erfindungsgemäß wird diese Aufgabe durch ein Verfahren zur Korrektur der Drift bei einem Mikroskop mit den Merkmalen gemäß Anspruch 1 gelöst.

Grundsätzlich werden also mit dem erfindungsgemäßen Verfahren zunächst zwei zeitlich aufeinanderfolgende Bilder eines unbeweglichen Objekts aufgenommen. Beide Bilder werden mit einem Raster unterteilt, so dass auf beiden Bildern Blöcke erhalten werden, deren Zentrum durch Koordinaten, die sogenannten Bewegungshypothesen, definiert sind. Anschließend wird ein Block des zweiten Bildes ausgewählt und mit den Blöcken des ersten Bildes verglichen bis der ähnlichste Block im ersten Bild, der sogenannte Zielblock, gefunden ist. Stellt sich über den Vergleich heraus, dass die Koordinaten des im ersten Bild gefundenen Blocks mit den Koordinaten des Blocks des zweiten Bildes übereinstimmen, so hat der Block seine Lage nicht verändert und es liegt keine Drift vor. Sofern sich der Zielblock jedoch an einem anderen Ort befindet, kann ein Vektor ermittelt werden, der die Verschiebung dieses Blocks als Drift beschreibt.

Obwohl grundsätzlich auch bewegte Objekte verwendet werden können, ist es vorteilhaft, unbewegliche Objekte auszuwählen. Denn bei beweglichen Objekten ist zu berücksichtigen, dass hier auch eine Drift durch die Objektbewegung simuliert werden könnte, die nur dann wieder berücksichtigt, d. h. herausgerechnet werden kann, wenn das Bewegungsmuster des Objekts bekannt ist. Dies dürfte allerdings in den wenigsten Fällen der zu untersuchenden Objekte der Fall sein.

Wenn der Block des zweiten Bildes mit allen Blöcken des ersten Bildes verglichen wird, kann der sogenannte Zielblock ermittelt werden, für den gilt, dass er dem Ausgangsblock, also dem Block des zweiten Bildes am ähnlichsten ist. Aus der Kenntnis der Blockkoordinaten lässt sich dann der Vektor bestimmen, der die Drift kennzeichnet.

Für den Vergleich der Blöcke können eine Reihe von Verfahren verwendet werden, mit deren Hilfe ermittelt werden kann, ob die miteinander verglichenen Blöcke zueinander ähnlich sind. Allerdings muss auch eine Bewertung vorgenommen werden, die eine Aussage darüber zulässt, wie hoch der Grad der Ähnlichkeit ist, um später entscheiden zu können, welches der Zielblock ist, welcher Block also dem Ausgangsblock am ähnlichsten ist.

Um die Genauigkeit zu erhöhen ist es möglich, den Zielblock weiter in Unterblöcke zu unterteilen und das Verfahren für diese Unterblöcke nochmals durchzuführen. Dies kann dann so lange fortgesetzt werden, bis keine bessere Ähnlichkeit mehr ermittelt werden kann. Für diesen Fall ergibt sich die Drift dann aus einer Summe von Einzelschritten, die sich aus der Einbeziehung der Unterblöcke ergeben.

Die Korrektur der Drifts im Mikroskop kann dann etwa dadurch erfolgen, dass die Drift als Scheinbewegung aus den ermittelten Bildern herausgerechnet wird.

Ein erfindungsgemäßes Mikroskop weist somit eine Vorrichtung zum Aufnehmen eines ersten und eines zweiten Bildes auf. Weiterhin ist eine Einrichtung zur Korrektur der Drift vorgesehen. Diese Einrichtung ist mit einer Einheit zum Aufteilen des ersten und zweiten Bildes in Blöcke ausgestattet. Eine Einheit zum Vergleich eines Blocks des zweiten Bildes mit den Blöcken des ersten Bildes ermöglicht es, die Ähnlichkeit zwischen den Blöcken zu ermitteln und zu bewerten

Das beschriebene Mikroskop und das Verfahren zum korrigieren der Drift haben den Vorteil, dass die Drift für sehr kleine Werte genau erfasst und korrigiert werden kann. Weiterhin ist die erfasste Drift von dessen Ursache unabhängig und insbesondere nicht auf reine Temperaturänderungen beschränkt.

Außerdem kann die Richtung der Drift bestimmt und entsprechend auch in x-y-Richtung korrigiert werden.

Weitere Vorteile und vorteilhafte Ausführungsformen der Erfindung sind Gegenstand der nachfolgenden Figuren sowie deren Beschreibungen.

Es zeigen im Einzelnen:

Fig. 1.    eine schematische Ansicht eines Beispiels des Mikroskops mit einer Einrichtung zum Erfassen und Korrigieren der Drift;

Fig. 2    den grundsätzlichen Verfahrensablauf zur Bestimmung der Drift

Fig. 3    eine Prinzipdarstellung eines Bewegungsschätzers

Fig. 4    eine Prinzipdarstellung eines Bewegungsschätzers mit Unterteilung in Unterblöcke

Fig. 5    eine Prinzipdarstellung der Driftkorrektur bei einem konventionellen Mikroskop

Fig. 6    eine Prinzipdarstellung einer alternativen Driftkorrektur bei einem Konfokalmikroskop

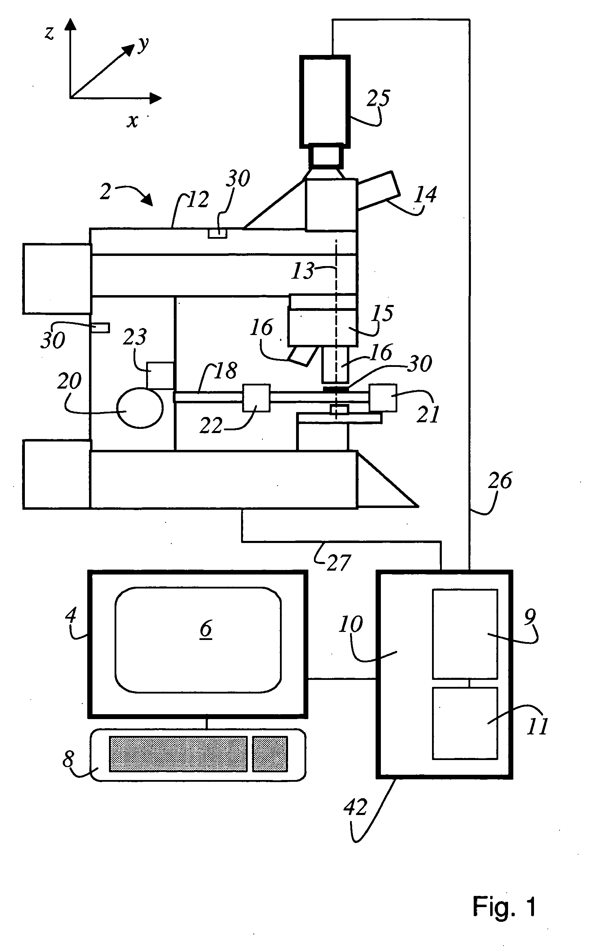

In Fig. 1 ist ein als optisches Gerät 2 ein Mikroskop schematisch dargestellt In dem hier gezeigten Ausführungsbeispiel ist dem Mikroskop 2 ein Computer 4 mit Display 6 und einem Eingabemittel 8, sowie eine Steuer- und Kontrolleinheit 10 zur Steuerung der verschiedenen Mikroskopfunktionen, zugeordnet. Die Steuer- und Kontrolleinheit 10 umfasst einen Speicher 9 und einen Mikroprozessor 11. Es ist selbstverständlich, dass das Mikroskop 2 jede denkbare Form und Ausstattung annehmen kann und die Darstellung in Fig. 1. nicht als Beschränkung aufgefasst werden soll. Das Mikroskop 2 umfasst ein Stativ 12, an dem mindestens ein Okular 14, mindestens ein Objektiv 16 und einen in allen drei Raumrichtungen verstellbarer Mikroskoptisch 18 vorgesehen ist. Auf dem Mikroskoptisch 18 kann eine mikroskopisch zu untersuchende oder zu behandelndes Objekt 30 aufgelegt werden. Wie durch das Koordinatensystem schematisch dargestellt, verlaufen die x-z-Richtung in der Zeichenebene. Die y-Richtung liegt in dieser Darstellung senkrecht zur Zeichenebene. In dem hier dargestellten Ausführungsbeispiel umfasst das Mikroskop 2 einen Revolver 15, an dem die mehreren Objektive 16 angebracht sind. Eines der 16, befindet sich in einer Arbeitposition und, definiert eine optische Achse 13. Beidseitig zu dem Stativ 12 ist jeweils ein Verstellknopf 20 vorgesehen mit dem der Mikroskoptisch 18 in der Höhe (in z-Richtung) relativ zu dem Objektiv 16 in der Arbeitsposition verstellt werden kann. Der Mikroskoptisch 18 des Mikroskops 2 kann mit einem ersten Motor 21 in der x-Richtung, mit einem zweiten Motor 22 in der y-Richtung und mit einem dritten Motor 23 in der z-Richtung verstellt werden. Die Ansteuerung des ersten, zweiten und dritten Motors 21, 22 und 23 erfolgt über die Steuer- und Kontrolleinheit 10. Mit dem Mikroskop 2 ist eine Kamera 25 verbunden, die ein Bild des mit dem Objektiv 16 beobachteten Objekts 30 aufnimmt. Über eine erste elektrische Verbindung 26 ist die Kamera 25 mit der Steuer- und Kontrolleinheit 10 verbunden. Ebenso ist die Steuer- und Kontrolleinheit 10 über eine zweite elektrische Verbindung 27 mit dem Mikroskop 2 verbunden, über die Signale von Mikroskop 2 zur Steuer- und Kontrolleinheit 10 und Signale von der Steuer- und Kontrolleinheit 10 zum Mikroskop 2 geliefert werden. Es ist selbstverständlich, dass die Kamera 25 eine Videokamera oder eine CCD-Kamera sein kann. Im Speicher 9 können die von der Kamera 25 gelieferten und gegebenenfalls, vom Mikroprozessor 11 verrechneten Daten abgelegt werden. Diese Daten umfassen Werte zweier aufeinanderfolgender Bilder des Objekts 30 und gegebenenfalls die Vergleichswerte dieser Bilder. In dem in Fig. 1 dargestellten Ausführungsbeispiel sind die ist die Steuer- und Kontrolleinheit 10 in einer externen mit dem Mikroskop 2 verbundenen Elektronikbox 42 untergebracht.

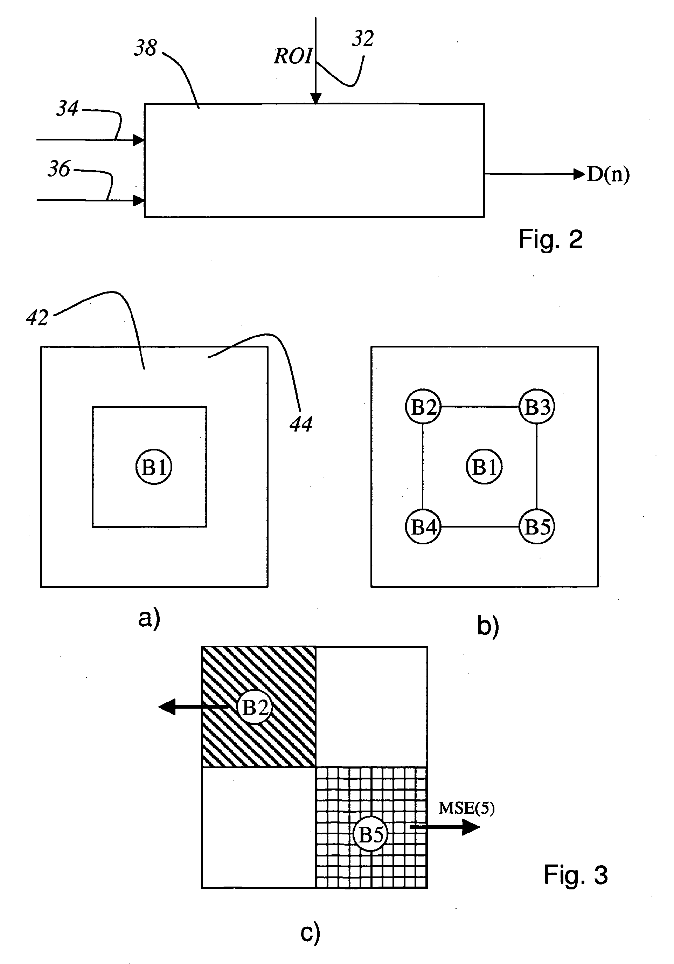

Wie bereits geschildert kann die Gesamtheit der Komponenten des Mikroskops 2 eine Drift verursachen. Das grundsätzliche Verfahren zum erfindungsgemäßen Bestimmen der Drift ist in Fig. 2 gezeigt. Dabei werden zunächst zwei zeitlich aufeinanderfolgende Bilder eines interessierenden Bereiches des Objekts 30 aufgenommen, wobei dieser Bereich üblicherweise als ROI (region of interest) abgekürzt wird. Die Auswahl des ROI erfolgt im Schritt 32 bevorzugt durch den Benutzer. Von dieser ROI wird nun in einem weiteren Schritt zu einem ersten Zeitpunkte T(n-1) ein erstes Bild und zu einem zweiten Zeitpunkt T(n) ein zweites Bild bevorzugt in Pixelkoordinaten aufgenommen. Die ROI ist dabei bevorzugt quaderförmig ausgewählt. In einer Einrichtung zur Berechnung der Drift 38 werden die aus dem ersten und zweiten Zeitpunkt gewonnen Daten verarbeitet und daraus die aktuelle Drift d(n) berechnet. Für die diskreten Zeitpunkte T(n-1) und T(n) werden damit also Bildwerte ermittelt, die beispielsweise als Intensitätswerte I(x,y,T(n-1)) und I(x,y,T(n)) darstellbar sind. Diese werden der Einrichtung zur Berechnung der Drift 38 in den Schritten 34 für I (x,y, T(n)) und 36 für I(x,y,T(n-1))zugeführt. Voraussetzung zur Durchführung dieses Verfahrens ist, dass innerhalb der ROI ein unbewegliches Objekt liegt und die ROI einen erkennbaren Bildinhalt aufweist, insbesondere also nicht vollständig schwarz ist. Sofern in der ROI lediglich ein bewegliches Objekt liegt wird durch die Eigenbewegung des Objekts eine Drift vorgetäuscht, der nur dann weiter ausgewertet werden kann, wenn der zeitliche Ablauf der Bewegung des Objekts bekannt ist, was jedoch in der überwiegenden Anzahl der Fälle nicht der Fall ist.

Zur Berechnung der aktuellen Drifts d(n) wird ein Bewegungsschätzer verwendet, bei dem die Bewegung des Objekts über den Vergleich von Blöcken auf Ihre Ähnlichkeit hin erfolgt. Hierzu werden das erste und das zweite Bild des ausgewählten ROI zunächst in Blöcke unterteilt. Dann erfolgt ein Vergleich eines Blocks des ersten Bildes mit allen Blöcken des zweiten Bildes, mit dem ermittelt wird welcher Grad an Ähnlichkeit zwischen den verglichenen Blöcken besteht. Es wird also der Bildausschnitt gesucht, welcher der Szene aus dem letzten Bild am ähnlichsten ist. Als Ähnlichkeitsmaß für die Ähnlichkeit zwischen zwei Blöcken kann beispielsweise die minimale quadratische Summe für eine vorgegebene ROI und einen zu bewertenden Driftvektor d. Die minimale quadratische Summe MSE lässt sich wie folgt darstellen:

$$MSE(ROI, \vec{d}) \simeq \sum_{\bar{x} \in ROI} \left( I(\bar{x}, T(n-1)) - I(\bar{x} + \vec{d}, T(n)) \right)^2$$

Das Prinzip dieses Bewegungsschätzers ist in Fig. 3 dargestellt, wobei es erforderlich ist, die Menge aller möglichen Verschiebungsvektoren zu ermitteln.

Wie in Fig. 3a) zu sehen ist, wird hierzu aus der vordefinierten ROI 40 ein erster Block 42 definiert, der minimal halb so groß ist wie die vordefinierte ROI 40. Dieser erste Block 42 wird in der Mitte der vordefinierten ROI 40 positioniert. Mit dem Zentrum B1 und seinen Ecken B2, B3, B4 und B5 definiert der erste Block 42 damit fünf Bewegungshypothesen, wie in Fig. 3b) dargestellt. Die Zentren B1 bis B5 bilden 5 Bewegungshypothesen für eine mögliche Bewegung, die zwischen dem ersten und dem zweiten Bild erfolgt sein können. Diese fünf Bewegungshypothesen müssen nun bewertet werden, d. h. durch Vergleich wird die Wahrscheinlichkeit für eine Bewegung in die Richtung B1 bis B5 ermittelt. Für jede Bewegungshypothese wird entsprechend ein MSE ermittelt, so dass insgesamt die Bewegungshypothesen MSE (1) bis MSE(5) nach obiger Gleichung ermittelt werden. Die ermittelten MSE (2) und MSE (5) sind in Fig. 3c) schematisch dargestellt. Wie bereits angesprochen muss die Berechnung allerdings für alle Bewegungshypothesen B1-B5 durchgeführt werden.

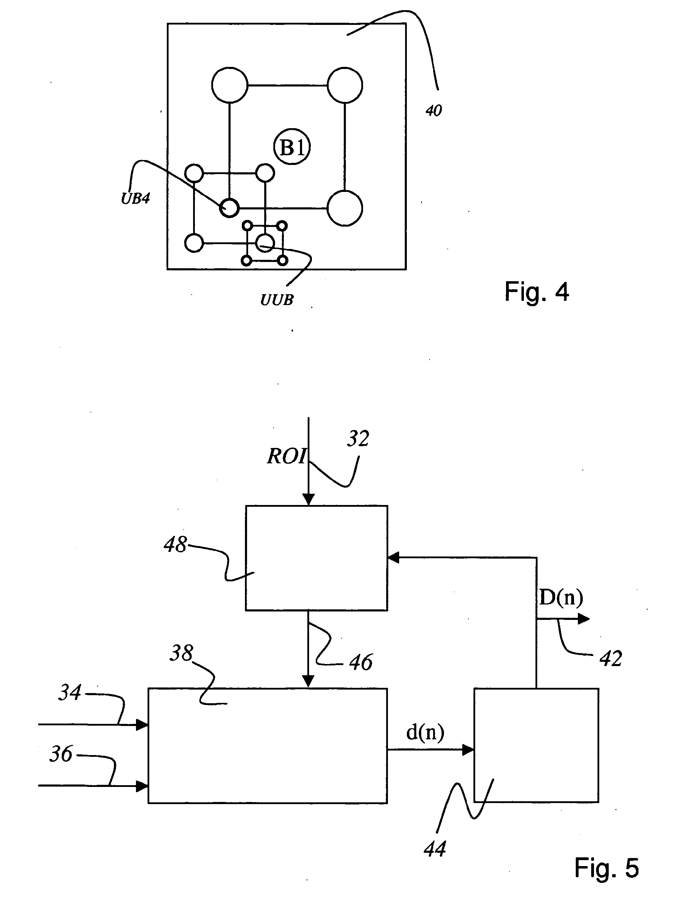

Sobald alle Bewegungshypothesen getestet sind, kann ermittelt werden, welcher Block der Zielblock ist, d. h. bei welchem Block der MSE am geringsten ist. Für diesen Zielblock steht damit der aktuelle Driftvektor d(n) fest. Nun kann in diesem Zielblock genauso weiter verfahren. Hierzu wird, wie in Fig. 4 am Beispiel des Blocks B4 gezeigt, die ursprüngliche Zielblockgröße halbiert. Dann werden im Raum des Zielblocks B4 wiederum, wie im Zusammenhang mit Fig. 3 bereits beschrieben, fünf Unterblöcke generiert. Wiederum werden alle fünf Bewegungshypothesen getestet und aufgrund des Tests der Unterzielblock ermittelt. Für den so neu ermittelten Unterzielblock steht damit wieder der aktuelle Driftvektor d(n) fest und es kann dann entsprechend mit weiteren Unterblöcken UUB weiter verfahren werden.

Wird dieses Verfahren sukzessive rekursiv weitergeführt, so erhält man über die Ermittlung der jeweiligen Zielblöcke eine Anzahl von Driftvektoren, deren Summe die Gesamtdrift repräsentiert. Dabei wird die Fläche des ROI mit Hypothesen gekachelt. Startet man beispielsweise mit einer ROI, die eine Pixelgröße von 14x14 aufweist, so kann das Verfahren so lange weitergeführt werden, bis eine Pixelgröße von 2x2 für den kleinsten Block erreicht ist. Damit ist nach maximal 25 Operationen von sukzessiv kleiner werdenden Blöcken der Driftvektor ermittelt.

Die so ermittelte Drift wird anschließend im Mikroskop kompensiert. Hierzu kann die Drift z. B. in einem nachfolgenden Rechenschritt, der insbesondere in einer Recheneinheit des Mikroskops durchgeführt wird, herausgerechnet werden. Dabei kann etwa die Steuer und Kontrolleinrichtung 10 des Mikroskops 2 eingesetzt werden.

In Fig. 5 ist ein möglicher Gesamtablauf des Verfahrens für ein konventionelles Mikroskop 2 nochmals dargestellt. Dieser besteht darin, dass zunächst im Schritt 32 eine ROI auf dem Bildschirm 6 auswählt wird. Nach der Auswahl läuft der beschriebene Algorithmus zur Driftkompensation ab. Wesentlich dabei ist allerdings, dass vom Benutzer eine unbewegliche Struktur des Objekts 30 ausgewählt wird. In einem Verschieber 48 wird mit einer dem verwendeten Algorithmus angepassten Verschiebevorschrift festgelegt, um welchen Betrag und welche Richtung für den nächsten Bewegungsschätzungs-Schritt zu verschieben ist. Dies hängt im Wesentlichen von der Position des ermittelten Zielblocks ab. Die Verschiebung erfolgt dann im Schritt 46. Zur Berechnung der aktuellen Drifts d(n) wird dann der Bewegungsschätzer verwendet, bei dem die Bewegung des Objekts über den bereits beschriebenen Vergleich der Blöcke B1 bis B5 auf Ihre Ähnlichkeit hin erfolgt. Hierzu werden die Intensitätswerte des ersten Bilds 34 und des zweiten Bilds 36 des ausgewählten ROI für die zu vergleichenden Blöcke in der Einrichtung zum Berechnen der Drift 38 verglichen und so die minimale Abweichung bestimmt. Damit kann der Bildausschnitt gefunden werden, welcher der Szene aus dem letzten Bild am ähnlichsten ist. Der sich daraus ergebende aktuelle Driftvektor d(n) wird einem Integrator 44 zugeführt, in dem die sich aus der Summe aller Einzeldrift an d(n) ergebende Gesamtdrift D(n) ermittelt wird. Dieser Gesamtdrift D(n) wird zur späteren Korrektur im Schritt 42 abgespeichert.

Da nun die Gesamtdrift D(n) des Mikroskops 2 bekannt ist, kann er bei der Darstellung beliebiger, auch beweglicher Objekte berücksichtigt werden, indem er nach der Aufnahme des Objekts in einem nachfolgenden Schritt aus dem Bild herausgerechnet wird.

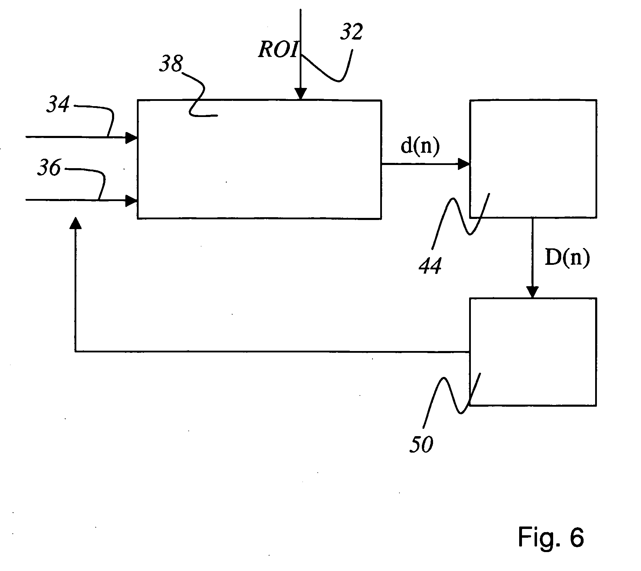

In Fig. 6 ist eine alternative Vorgehensweise bei der Driftkorrektur bei einem Konfokalmikroskop dargestellt. Die Abbildung in solchen Mikroskopen erfolgt üblicherweise mit Hilfe sogenannter Galvanometer, die einen auf das Objekt fallenden lichtstrahl so ausrichten, dass er das Objekt zeilenweise ausleuchtet. Der Galvanometer wird hierzu aktiv gesteuert, um alle Punkte des Objekts einsammeln zu können. Diese aktive Steuerung kann nun in der Prozess der Driftermittlung und -korrektur im Rahmen der Bewegungsfreiheitsgrade der Galvanometer integriert werden, wobei auf den in Fig. 5 gezeigten Verschieber 48 verzichtet wird. Diese Funktion wird in die Steuerung der Galananometer integriert. Nach der Auswahl eines ROI im Schritt 32 wird wiederum die aktuelle Drift d(n) in der Einrichtung zum Berechnen des Drifts 38 ermittelt. Der aktuelle Drift d(n) wird dem Integrator 44 zugeführt, der die jeweils aktuellen Gesamtdrift D(n) durch Integration ermittelt. Dieses Ergebnis wird an die Galvanosteuerung 50 übergeben, so dass die Gesamtdrift bei der Positionierung der Spiegel berücksichtigt werden kann. Somit arbeitet der Algorithmus immer im gleichen Block. Der Scanner, der das Objekt abtastet erfasst aber analog verschobene Bilder.

Grundsätzlich ist es auch möglich, bei einem Konfokalmikroskop die Steuerung derart umzugestalten, dass in sukzessiver Folge zwei unterschiedliche Bilder aufgenommen werden. Das erste Bild wird hierzu unmittelbar aus der Probe selbst gewonnen, während das zweite Bild aus der Zwischenebene erhalten wird. Die Gesamtfolge der gewonnenen Bilder lässt sich dann so generieren, dass in einer sukzessiven Folge von Probenbildern ein Referenzbild aus der Zwischenbildebene aufgenommen wird, welches zur Driftbestimmung herangezogen wird. In diesem Fall liegt definitiv ein unbewegliches Objekt vor und die Aufnahme kann sich auf die für die Driftbestimmung relevante Anzahl von Pixeln beschränken.

**Bezugszeichenliste**

| 2 | Mikroskop |
|---|---|
| 4 | Computer |
| 6 | Display |
| 8 | Eingabemittel |
| 9 | Speicher |
| 10 | Steuer- und Kontrolleinheit |
| 11 | Mikroprozessor |
| 12 | Stativ |
| 13 | optische Achse |
| 14 | Okular |
| 15 | Revolver |
| 16 | Objektive |
| 18 | Mikroskoptisch |
| 20 | Verstellknopf |
| 21 | erster Motor |
| 22 | zweiter Motor |
| 23 | dritter Motor |
| 25 | Kamera |
| 26 | erste elektrische Verbindung |
| 27 | zweite elektrische Verbindung |
| 30 | Objekt |
| 32 | Auswahl ROI |
| 34 | Intensitätswert des ersten Bilds |
| 36 | Intensitätswerte des zweiten Bilds |
| 38 | Einrichtung zur Berechnung des Drifts |
| 40 | ROI (region of interest) |
| 42 | Speichern des Gesamtdrifts |
| 44 | Integrator |
| 46 | Verschiebung |
| 48 | Verschieber |
| 50 | Galvanometersteuerung |
| d(n) | aktueller Drift |
| D(n) | Gesamtdrift |

**Patentansprüche**

1. Verfahren zur Berechnung der Drift eines Mikroskops (2) **gekennzeichnet durch** die folgenden Schritte:

- dass ein unbewegliches Objekt (30) ausgewählt wird;
- dass von einem interessierenden Bereich des unbeweglichen Objekts (30) zu einem ersten Zeitpunkt (T(n-1)) ein erstes Bild und zeitlich darauf folgend zu einem zweiten Zeitpunkt (T(n)) ein zweites Bild aufgenommen wird,

wobei der interessierende Bereich innerhalb des unbeweglichen Objekts (30) liegt;

- dass das erste und das zweite Bild mit einem Raster in Blöcke unterteilt werden und ein Block (B1) des zweiten Bildes mit den Blöcken (B1,..., B5) des ersten Bilds verglichen wird, wobei aus diesem Vergleich aus den Blöcken des ersten Bildes ein Zielblock ermittelt wird, der dem Block (B1) des zweiten Bildes am ähnlichsten ist, wobei als Maß für die Ähnlichkeit der Blöcke (B1,..., B5) eine minimale quadratische Summe (MSE) verwendet wird,
- dass aus dem Vergleich eine Gesamtdrift (D(n)) berechnet wird, wobei die Gesamtdrift (D(n)) in mehreren Einzelschritten bestimmt und **durch** eine Integration in einem Integrator (44) ermittelt wird, dem die aktuellen Driftvektoren (d(n)) zur Integration zugeführt werden, und
- dass die Gesamtdrift (D(n)) zur späteren Korrektur der Drift des Mikroskops (2) abgespeichert wird.

2. Verfahren nach Anspruch 1 **dadurch gekennzeichnet, dass** der Zielblock durch einen bewerteten Vergleich des Blocks des zweiten Bildes mit den Blöcken des ersten Bildes ermittelt wird.

3. Verfahren nach Anspruch 1 **dadurch gekennzeichnet, dass** der Zielblock in iterativen Schritten mit jeweils kleiner werdenden Ausschnitten ermittelt wird.

4. Verfahren nach einem der Ansprüche 1 bis 3 **dadurch gekennzeichnet, dass** die Drift dadurch korrigiert wird, dass sie aus dem zweiten Bild herausgerechnet, insbesondere in einem der Driftbestimmung folgenden Rechenschritt, herausgerechnet wird.

5. Verfahren nach einem der Ansprüche 1 bis 4 **dadurch gekennzeichnet, dass** beim Vergleich der Blöcke des ersten und des zweiten Bildes die Ähnlichkeit der Blöcke bestimmt wird.

6. Verfahren nach einem der Ansprüche 1 bis 5 **dadurch gekennzeichnet, dass** das erste Bild aus dem Objekt selbst und das zweite Bild aus einer Zwischenbildebene des Objekts aufgenommen wird.

7. Mikroskop (2) mit einer Vorrichtung zum Aufnehmen eines ersten und eines zweiten Bildes eines interessierenden Bereich innerhalb eines unbeweglichen Objekts und einer Einrichtung (38) zur Berechnung der Drift des Mikroskops, wobei die Einrichtung (38) zur Berechnung der Drift eine Einheit zum Aufteilen des ersten und zweiten Bildes in Blöcke umfasst, eine Einheit zum Vergleich eines Blocks (B1) des zweiten Bildes mit den Blöcken (B1, ..., B5) des ersten Bildes, wobei aus diesem Vergleich aus den Blöcken des ersten Bildes ein Zielblock ermittelbar ist, eine Einheit zum Ermitteln der Ahnlichkeit des ersten und zweiten Bildes, wobei der ermittelte Zielblock derjenige Block ist, der dem Block (B1) des zweiten Bildes am ähnlichsten ist und dass eine minimale quadratische Summe (MSE) ein Maß für die Ähnlichkeit der Blöcke (B1,..., B5) ist, dass ein Integrator (44) vorgesehen ist, dem die aktuellen Driftvektoren (d(n)) zuführbar sind und der zum Integrieren einer Gesamtdrift (D(n)) aus den einzelnen Driftvektoren (d(n))vorgesehen ist, und dass die Gesamtdrift (D(n)) zur späteren Verwendung abspeicherbar ist.

8. Mikroskop (2) nach Anspruch 7 **dadurch gekennzeichnet, dass** ein Verschieber (48) vorgesehen ist, der mit einer Verschiebevorschrift festlegt, um welchen Betrag und welche Richtung für einen nächsten Bewegungsschätzungs-Schritt zu verschieben ist.

9. Mikroskop (2) nach Anspruch 7 **dadurch gekennzeichnet, dass** das Mikroskop (2) als Konfokalmikroskop ausgeführt ist und eine Galvanometersteuerung (50) vorgesehen ist, die auf die mit dem Integrator (44) ermittelten Werte und/oder hierzu korrespondierenden Werte reagiert.

**Claims**

1. Method for calculating the drift of a microscope (2), **characterized by** the following steps:

   - a stationary object (30) is selected;
   - a first image of a region of interest of the stationary object (30) is recorded at a first time (T(n-1)) and a second image is subsequently recorded at a second time (T(n)), the region of interest lying inside the stationary object (30);
   - the first and second images are subdivided into blocks by a grid, and a block (B1) of the second image is compared with the blocks (B1,...,B5) of the first image, a target block which is most similar to the block (B1) of the second image being ascertained from the blocks of the first image by this comparison, a minimum mean square error (MSE) being used as a measure of the similarity of the blocks (B1,...,B5),
   - an overall drift (D(n)) is calculated from the comparison, the overall drift (D(n)) being determined in a plurality of individual steps and ascertained by integration in an integrator (44) to which the current drift vector (d(n)) is supplied for integration, and
   - the overall drift (D(n)) is stored for future correction of the drift of the microscope (2).

2. Method according to Claim 1, **characterized in that** the target block is ascertained by a quantified comparison of the block of the second image with the blocks of the first image.

3. Method according to Claim 1, **characterized in that** the target block is ascertained in iterative steps with respectively decreasing windows.

4. Method according to one of Claims 1 to 3, **characterized in that** the drift is corrected by subtracting it from the second image, in particular subtracting in a computation step following the drift determination.

**5.** Method according to one of Claims 1 to 4, **characterized in that** the similarity of the blocks is determined during the comparison of the blocks of the first and second images.

**6.** Method according to one of Claims 1 to 5, **characterized in that** the first image is recorded from the object itself and the second image is recorded from an intermediate image plane of the object.

**7.** Microscope (2) having a device for recording a first image and a second image of a region of interest inside a stationary object and an instrument (38) for calculating the drift of the microscope, the drift calculation instrument (38) comprising a unit for dividing the first and second images into blocks, a unit for comparing a block (B1) of the second image with the blocks (B1,..., B5) of the first image, a target block being ascertainable from this comparison of the blocks of the first image, a unit for ascertaining the similarity of the first and second images, the target block ascertained being that block which is most similar to the block (B1) of the second image and wherein a minimum mean square error (MSE) is provided as a measure of the similarity of the blocks (B1,..., B5), an integrator (44) is provided, which can be supplied with the current drift vectors (d(n)) and which is intended for integrating an overall drift (D(n)) from the individual drift vectors (d(n)), and the overall drift (D(n)) can be stored for future use.

**8.** Microscope (2) according to Claim 7, **characterized in that** a displacer (48) is provided, which, with a displacement rule, determines by which amount and which direction to displace for a subsequent movement estimation step.

**9.** Microscope (2) according to Claim 7, **characterized in that** the microscope (2) is configured as a confocal microscope and a galvanometer control (50) is provided, which responds to the values ascertained by the integrator (44) and/or values corresponding thereto.

## Revendications

**1.** Procédé de calcul de la dérive d'un microscope (2), **caractérisé par** les étapes suivantes:

- on sélectionne un objet immobile (30);
- on prend à un premier instant [T(n-1)] une première image d'une zone intéressante de l'objet immobile (30) et une deuxième image à un deuxième instant [T(n)] qui suit, la zone intéressante étant située à l'intérieur de l'objet immobile (30);
- on divise la première image et la deuxième image en blocs au moyen d'un réticule et on compare un bloc (B1) de la deuxième image avec les blocs (B1, ..., B5) de la première image, à partir de cette comparaison on détermine, à partir des blocs de la première image, un bloc cible qui est le plus semblable au bloc (B1) de la deuxième image, en utilisant comme mesure de la similitude des blocs (B1, ..., B5) une somme quadratique minimale (MSE),
- à partir de la comparaison, on calcule une dérive globale [D(n)], en déterminant la dérive globale [D(n)] en plusieurs étapes individuelles et en déterminant une intégration dans un intégrateur (44), auquel on envoie les vecteurs de dérive actuels [d(n)] pour l'intégration, et
- on mémorise la dérive globale [D(n)] en vue d'une correction ultérieure de la dérive du microscope (2).

**2.** Procédé selon la revendication 1, **caractérisé en ce que** l'on détermine le bloc cible par une comparaison évaluée du bloc de la deuxième image avec les blocs de la première image.

**3.** Procédé selon la revendication 1, **caractérisé en ce que** l'on détermine le bloc cible par des étapes itératives avec des segments de plus en plus petits.

**4.** Procédé selon l'une quelconque des revendications 1 à 3, **caractérisé en ce que** l'on corrige la dérive en la calculant à partir de la deuxième image, en particulier en la calculant dans une étape de calcul qui suit la détermination de la dérive.

**5.** Procédé selon l'une quelconque des revendications 1 à 4, **caractérisé en ce que** l'on détermine la similitude des blocs lors de la comparaison des blocs de la première image et de la deuxième image.

**6.** Procédé selon l'une quelconque des revendications 1 à 5, **caractérisé en ce que** l'on prend la première image à partir de l'objet lui-même et la deuxième image à partir d'un plan image intermédiaire de l'objet.

7.  Microscope (2) comportant un dispositif pour prendre une première image et une deuxième image d'une zone intéressante à l'intérieur d'un objet immobile et un dispositif (38) de calcul de la dérive du microscope, le dispositif (38) de calcul de la dérive comprenant une unité pour diviser la première image et la deuxième image en blocs, une unité pour comparer un bloc (B1) de la deuxième image avec les blocs (B1, ..., B5) de la première image, un bloc cible pouvant être déterminé à partir de cette comparaison à partir des blocs de la première image, une unité pour déterminer la similitude de la première image et de la deuxième image, le bloc cible déterminé étant le bloc qui est le plus semblable au bloc (B1) de la deuxième image et une somme quadratique minimale (MSE) constituant une mesure de la similitude des blocs (B1, ..., B5), un intégrateur (44) auquel les vecteurs de dérive actuels [d(n)] peuvent être envoyés et prévu pour intégrer une dérive globale [D(n)] à partir des vecteurs de dérive individuels [d(n)], et la dérive globale [D(n)] pouvant être mémorisée en vue d'une utilisation ultérieure.

8.  Microscope (2) selon la revendication 7, **caractérisé en ce qu'**il est prévu un translateur (48), qui fixe avec une prescription de translation la valeur et la direction du déplacement à effectuer pour une prochaine étape d'évaluation de mouvement.

9.  Microscope (2) selon la revendication 7, **caractérisé en ce que** le microscope (2) est un microscope confocal et **en ce qu'**il est prévu une commande de galvanomètre (50) qui réagit aux valeurs déterminées avec l'intégrateur (44) et/ou à des valeurs correspondant à celles-ci.

Fig. 1

Fig. 2

a)

b)

c)

MSE(5)

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19959228
- DE 19530136 C1
- JP 7253548 A
- US 20020105723 A
- EP 0332169 A
- EP 0425288 A